# EUROPÄISCHE PATENTANMELDUNG

(11) **EP 1 690 623 A1**
(43) Veröffentlichungstag der Anmeldung: **16.08.2006**
(21) Anmeldenummer: 06002805.7
(22) Anmeldetag: 13.02.2006
(51) Int. Cl.: B23K 9/28, B23K 9/167, B23K 9/00, A61C 13/20

(54) **Elektrode, insbesondere für dentale Schweissarbeiten, mit einer von einer Keramikhülse umgebenen Schweissnadel**

(30) Priorität: 11.02.2005 DE 202005002313 U
(71) Anmelder: Schütz-Dental GmbH, 61191 Rosbach (DE)
(72) Erfinder: Kranjc, Josef, 61231 Bad Nauheim (DE)
(74) Vertreter: Hebing, Norbert

(57) **Zusammenfassung**

Die Anmeldung beschreibt eine Elektrode, insbesondere für dentale Schweißarbeiten.

Insbesondere bei Schweißarbeiten am Boden von Kavitäten tritt das Problem auf, dass außerhalb der Spitze der Elektroden-Schweißnadel (3) nicht beabsichtigte elektrische Überschläge zwischen der Mantelfläche der Schweißnadel (3) und den seitlichen Bereichen der Kavitäten auftreten.

Um dies zu vermeiden, sieht die Erfindung vor, dass zumindest der aus einem zum manuellen Halten der Elektrode vorgesehenen Stift (1) hervorstehende Teil der Mantelfläche der Schweißnadel (3) ganz oder teilweise von einer Keramikhülse (10) umgeben ist. Die Keramikhülse (10) ist an einer Überwurfmutter (6) befestigt, die auf den Stift (1) aufgeschraubt wird, um die Lamellen (11) einer Quetschhalterung für die Schweißnadel (3) zusammenzudrücken.

## Beschreibung

Die Erfindung bezieht sich auf eine Elektrode, insbesondere für dentale und andere feinmechanische Schweißarbeiten, bestehend aus einer in einem Stift gehaltenen Schweißnadel.

Zahnprothesen, wie Brücken und dergleichen, werden im zahntechnischen Labor unter anderem mittels Elektroschweißen bearbeitet. Dazu wird z. B. eine zu bearbeitende Brücke an den einen Pol einer Spannungsquelle angeschlossen und die Spitze einer mit dem Gegenpol verbundenen Elektrode in den Bereich der zu verschweißenden Stelle gebracht. Sobald die Elektrodenspitze nahe genug an die zu verschweißende Stelle herangeführt ist, entsteht ein Lichtbogen mit sehr hohen Temperaturen, der zum punktuellen Aufschmelzen des Werkstückes führt. Die Elektroden haben dazu eine Schweißnadel mit einer sehr feinen Spitze, an der sehr hohe Feldstärken auftreten, so dass ein Lichtbogen bevorzugt dort auftritt. Im Bereich der Zahntechnik müssen häufig aber Schweißarbeiten in Kavitäten ausgeführt werden, so dass es immer wieder zu beobachten ist, dass auch nicht beabsichtigte Überschläge zwischen der Mantelfläche der Schweißnadel und den seitlichen Bereichen der Kavitäten auftreten. Das Problem tritt aber nicht bei Schweißarbeiten in Zahnlabors, sondern generell in feinmechanischen Werkstätten auf.

Um dies zu vermeiden, schlägt die Erfindung vor, dass zumindest der aus dem Stift hervorstehende Teil der Mantelfläche der Schweißnadel ganz oder teilweise von einer Keramikhülse umgeben ist.

Es hat sich gezeigt, dass durch diese Maßnahme unerwünschte Überschläge, die nicht von der Spitze der Schweißnadel ausgehen, verhindert werden können.

Vorzugsweise ist die Keramikhülse mit einer Überwurfmutter verbunden, die zu einer Quetschhalterung für die Schweißnadel gehört.

Um zu verhindern, dass die Keramikhülse beim Befestigen der Schweißnadel an dem Stift beschädigt wird, sieht die Erfindung weiterhin vor, dass das von der Spitze der Schweißnadel entfernte rückwärtige Ende der Keramikhülse vor der Quetschhalterung des Stiftes endet, bzw. dass die Überwurfmutter einen Quetschbereich aufweist, in dem die Lamellen der Quetschhalterung bei einer auf den Stift aufgeschraubten Überwurfmutter zu liegen kommen, wobei das von der Spitze der Schweißnadel entfernte rückwärtige Ende der Keramikhülse vor dem Quetschbereich endet.

Vorzugsweise ist der Innendurchmesser der Keramikhülse gleich oder nur wenig größer als der Außendurchmesser der Schweißnadel, so dass diese passgenau in der Keramikhülse liegt.

Im Folgenden soll anhand eines Ausführungsbeispiels die Erfindung näher erläutert werden. Dazu zeigen:
- Fig. 1: einen Stift zum Halten der Schweißnadel,
- Fig. 2: eine Überwurfmutter einer Quetschhalterung, die mit einer erfindungsgemäßen Keramikhülse versehen ist,
- Fig. 3: eine Schweißnadel.

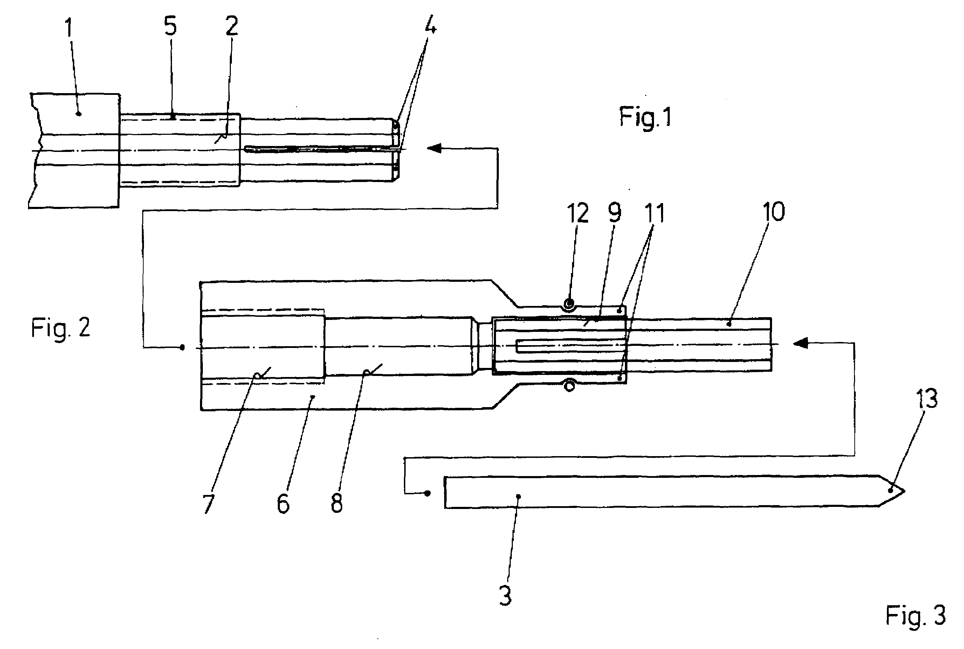

Gemäß Figur 1 besitzt der Stift 1 eine Längsbohrung 2, die einen Durchmesser von etwa 1,2 mm aufweist und daher geeignet ist, eine typische Schweißnadel 3 gemäß Fig.3 aufzunehmen. Am Einsteckende endet der Stift 1 in vier Lamellen 4, hinter denen sich ein Gewinde 5 befindet. Auf dieses ist eine Überwurfmutter 6 gemäß der Figur 2 aufschraubbar. Die langgestreckt ausgeführte Überwurfmutter 6 ist an einem Ende mit einem Innengewinde 7 versehen und im mittleren Abschnitt mit einem Quetschbereich 8. Wenn die Überwurfmutter 6 auf das Gewinde 5 am Stift 1 aufgeschraubt ist, werden die Lamellen 4 vom Quetschbereich 8 nach innen unmittelbar gegen die Mantelfläche der Schweißnadel 3 gedrückt und halten somit die dort in den Stift 1 eingesetzte Schweißnadel 3 reibschlüssig.

Am anderen Ende der Überwurfmutter 6 befindet sich eine koaxiale Bohrung 9 zur Aufnahme einer Keramikhülse 10, die dort ebenfalls reibschlüssig gehalten ist. Dazu wird die Bohrung 9 von vier weiteren Lamellen 11 umgeben, die von einem Stahlring 12 zueammengedrückt werden. Die Keramikhülse 10 ragt deutlich über das vordere Ende der Überwurfmutter 6 hinaus und umschließt die Schweißnadel 3 bis auf deren Spitze 13, so dass die Seiten (Mantelfläche) der vorne aus der Überwurfmutter 6 herausragenden Schweißnadel 3 an der Innenmantelfläche der Keramikhülse anliegen und damit elektrisch isoliert sind.

Das rückwärtige Ende der Keramikhülse 10 endet vor dem Quetschbereich 8, so dass beim Festziehen der Überwurfmutter 6 keine zusätzlichen Kräfte auf die Keramikhülse 10 ausgeübt werden.

### Bezugszeichenliste

- 1: Stift
- 2: Längsbohrung
- 3: Schweißnadel
- 4: Lamelle
- 5: Gewinde
- 6: Überwurfmutter
- 7: Innengewinde
- 8: Quetschbereich
- 9: Bohrung
- 10: Keramikhülse
- 11: Lamellen
- 12: Stahlring
- 13: Spitze

## Patentansprüche

1. Elektrode, insbesondere für dentale und andere feinmechanische Schweißarbeiten, bestehend aus einer in einem Stift (1) gehaltenen Schweißnadel (3), **dadurch gekennzeichnet, dass** zumindest der aus dem Stift (1) hervorstehende Teil der Mantelfläche der Schweißnadel (3) ganz oder teilweise von einer Keramikhülse (10) umgeben ist.

2. Elektrode nach Anspruch 1, **dadurch gekennzeichnet, dass** der Stift (1) eine Quetschhalterung mit wenigstens drei Lamellen (4) aufweist, die die Schweißnadel (3) allseitig umgeben und mittels einer Überwurfmutter (6) zum reibschlüssigen Halten der Schweißnadel (3) nach innen gebogen werden, und dass die Keramikhülse (10) mit der Überwurfmutter (6) verbunden ist.

3. Elektrode nach Anspruch 2, **dadurch gekennzeichnet, dass** das von der Spitze der Schweißnadel (3) entfernte rückwärtige Ende der Keramikhülse (10) vor der Quetschhalterung des Stiftes (1) endet.

4. Elektrode nach Anspruch 3, **dadurch gekennzeichnet, dass** die Überwurfmutter (6) einen Quetschbereich (8) aufweist, in dem die Lamellen (4) der Quetschhalterung bei einer auf den Stift (1) aufgeschraubten Überwurfmutter zu liegen kommen, wobei das von der Spitze der Schweißnadel (3) entfernte rückwärtige Ende der Keramikhülse (10) vor dem Quetschbereich (8) endet.

5. Elektrode nach einem der vorhergehenden Ansprüche, **dadurch gekennzeichnet, dass** der Innendurchmesser der Keramikhülse (10) gleich oder nur wenig größer ist als der Außendurchmesser der Schweißnadel (3), so dass diese passgenau in der Keramikhülse (10) liegt.
